# EUROPÄISCHE PATENTSCHRIFT

(11) **EP 3 192 769 B1**
(45) Veröffentlichungstag und Bekanntmachung des Hinweises auf die Patenterteilung: **19.07.2023**
(21) Anmeldenummer: 16020506.8
(22) Anmeldetag: 21.12.2016
(51) Int. Cl.: B67D 7/02, B67D 7/34, G06Q 10/06, A47L 11/40

(54) **DOSIEREINRICHTUNG, VERFAHREN ZUM BETREIBEN EINER DOSIEREINRICHTUNG UND BODENREINIGUNGSGERÄT**
DOSING DEVICE, METHOD FOR OPERATING A DOSING DEVICE AND FLOOR CLEANING DEVICE
DISPOSITIF DE DOSAGE, PROCÉDÉ DE FONCTIONNEMENT D'UN DISPOSITIF DE DOSAGE ET APPAREIL DE NETTOYAGE DE SOL

(30) Priorität: 22.12.2015 DE 102015122565
(43) Veröffentlichungstag der Anmeldung: 19.07.2017
(73) Patentinhaber: Saier, Michael, 79117 Freiburg / Kappel (DE); Saier, Beatrice, 79117 Freiburg / Kappel (DE)
(72) Erfinder: SAIER, Michael, 79117 Freiburg (DE); SCHUPP, Joachim, 79108 Freiburg (DE)
(74) Vertreter: Roche, von Westernhagen & Ehresmann

(56) Entgegenhaltungen:
- EP-A1- 2 511 227
- EP-A2- 2 913 431
- WO-A1-2015/106142
- DE-A1-102009 033 944
- US-A1- 2004 140 013

## Beschreibung

Die Erfindung betrifft zunächst eine Dosiereinrichtung nach dem Oberbegriff des Anspruches 1.

Dosiereinrichtungen werden von den Anmeldern und den mit den Anmeldern in Zusammenhang stehenden Unternehmen seit Jahrzehnten entwickelt und vertrieben. Die Herbert Saier GmbH, ein Unternehmen, an dem die Anmelder teilweise mit beteiligt sind, gehört zu den führenden Unternehmen im Bereich der Entwicklung und Fertigung von Dosiereinrichtungen und Dosieranlagen.

Die Erfindung bezieht sich auf eine Dosiereinrichtung, die der Bereitstellung einer Reinigungs- oder Desinfektionslösung, insbesondere in der Gebäudetechnik, dient.

Reinigungslösungen und Desinfektionslösungen werden in der Gebäudetechnik vielfach benötigt, und in großen Mengen eingesetzt. Insbesondere - aber nicht ausschließlich - bezieht sich die Erfindung auf Reinigungslösungen, die der Bodenreinigung dienen. Derartige Reinigungslösungen werden beispielsweise eingesetzt, um große Bodenflächen zu reinigen, und können selbstfahrend ausgebildet sein, beispielsweise auch als Aufsitz-Bodenreinigungsgerät. Sie sind aber auch teilweise als walk-behind-Geräte ausgestaltet. In diesen Bodenreinigungsgeräten wird eine Reinigungsflüssigkeit mit einer geforderten Dosierung an Reinigungsmittel(n) zur Reinigung der Bodenfläche und Einsatz mechanischer Elemente genutzt, teilweise umgewälzt, muss aber nach Überfahren einer gewissen, zu reinigenden Fläche, regelmäßig ersetzt werden.

Um derartige Reinigungsgeräte mit einer Reinigungslösung auszustatten, sind regelmäßig in den zu reinigenden Immobilien Dosiereinrichtungen fest angeordnet, häufig in entsprechenden Kellerräumen oder dafür eingerichteten Gebäudeteilen, zu denen die Mitarbeiter eines Reinigungsdienstes oder eines Hausmeister-Service-Dienstes Zutritt haben. Um die Reinigungslösung herzustellen, wird von einer Bedienperson an der Dosiereinrichtung eine entsprechende Eingabe vorgenommen.

Die Dosiereinrichtung gibt nach erfolgter Eingabe entweder zur Bereitstellung der gewünschten Reinigungslösung ein bestimmtes, vorprogrammiertes Volumen an Reinigungsmittelkonzentrat ab, welches beispielsweise in das Zielgerät oder in ein Zielbehältnis eingefüllt wird, und dort mit einer vorgegebenen Menge an Wasser gemischt wird. Alternativ kann von der Dosiereinrichtung die in ihrer Konzentration vorher bestimmte Reinigungslösung auch direkt fertig gemischt, bzw. in ihrer ordnungsgemäßen Konzentration, abgegeben werden.

An der Dosiereinrichtung des Standes der Technik können des Weiteren beispielsweise auch Mopp-Aufbereitungsanlagen mit der gewünschten Reinigungsflüssigkeit befüllt werden. Hierfür kann beispielsweise das gleiche Reinigungskonzentrat, ggf. auch ein anderes Reinigungsmittel verwendet werden.

Schließlich können an der Dosiereinrichtung auch andere Gefäße, im einfachsten Falle Putzeimer oder Sprühflaschen, mit der korrekt dosierten Reinigungsflüssigkeit befüllt werden.

Die Erfindung bezieht sich auch auf solche Dosiereinrichtungen, bei denen Desinfektionslösungen bereitgestellt werden. Beispielsweise ist für die Sanitärbereiche in größeren Gebäuden oder Objekten regelmäßig für eine regelmäßige Erneuerung der Handsprüh-Desinfektionsgeräte zu sorgen. Auch hier müssen Chemikalien, deren Umgang eine Reihe von Sicherheitsaspekten berührt, in der richtigen Dosierung in Gefäße, insbesondere in Handsprühflaschen gefüllt werden, und sodann zum Einsatzort transportiert werden.

Aus der WO 2015/106142 A1 geht ein Bodenreinigungsgerät in Form eines Walk-Behind-Gerätes hervor. Die Druckschrift offenbart keine Dosiereinrichtung zur Bereitstellung einer Reinigungs- oder Desinfektionslösung der gattungsgemäßen Art. Das bekannte Bodenreinigungsgerät erlaubt unter Zuhilfenahme eines mobilen Lesegerätes eine Erfassung von Informationen über Bedienkräfte, wie zum Beispiel Beginn und Ende von Arbeitszeiten,

Aus der EP 2 511 227 A1 geht eine gattungsgemäße Dosiervorrichtung hervor.

Hiervon ausgehend besteht die Aufgabe der Erfindung darin, die Dosiereinrichtung sicherer auszugestalten.

Die Erfindung löst diese Aufgabe mit den Merkmalen des Anspruches 1.

Gemäß der Erfindung besteht die Besonderheit darin, dass der Dosiereinrichtung eine Anmeldeeinrichtung zugeordnet ist. Die Anmeldeeinrichtung ermöglicht die Vornahme einer Anmeldung und/oder die Vornahme einer Abmeldung von Bedienpersonen und/oder Servicekräften an der Dosiereinrichtung.

Als Bedienperson im Sinne der vorliegenden Patentanmeldung wird jede Person bezeichnet, die die Dosiereinrichtung betätigt. Als Nutzer oder als Servicekraft wird jede Person bezeichnet, die in der Immobilie, in der die Dosiereinrichtung fest angeordnet ist, eine Servicetätigkeit durchzuführen hat. Beispielsweise kann ein Team von Reinigungskräften einer beliebigen Zahl, von zum Beispiel fünf Personen, als Reinigungsteam mit der Aufgabe betraut sein, zu einem bestimmten Zeitpunkt eine Reinigung, z. B. eine Bodenreinigung, in einem Gebäude durchzuführen. Eine Servicekraft ist nicht dazu autorisiert, die Dosiereinrichtung zu bedienen. Sie ist nur dazu autorisiert, sich an der Anmeldeeinrichtung anzumelden, bzw. abzumelden.

Dadurch, dass die erfindungsgemäße Dosiereinrichtung eine Anmeldevorrichtung aufweist, mittels der sich die Servicekräfte an der Dosiereinrichtung anmelden können, und auch wieder abmelden können, bietet die erfindungsgemäße Dosiereinrichtung die Möglichkeit, diese Anmelde- und Abmeldevorgänge zu erfassen. Insbesondere kann eine Zeiterfassung erfolgen. Das Steuergerät der Dosiereinrichtung kann also insbesondere die Zeitpunkte der Vornahme einer Anmeldung und/oder die Zeitpunkte der Vornahme einer Abmeldung erfassen. Diese Informationen über An- und Abmeldevorgänge können in der Dosiereinrichtung gespeichert werden, insbesondere aber vorteilhaft von der Dosiereinrichtung über ein Kommunikationsmodul an eine Zentrale übermittelt werden. Die Zentrale kann nach Erhalt der entsprechenden Informationen eine Verwaltung der Arbeitszeiten vornehmen, bis hin zu der Möglichkeit, nach Erhalt der Informationen über An- und Abmeldevorgänge eine Abrechnung der Personalkosten weitgehend automatisiert zu erstellen.

Auch eine Erfassung der Arbeitszeiten, und/oder das Erzeugen von Warnsignalen, wenn die Bedienpersonen oder Servicekräfte nicht innerhalb vorgegebener Zeiträume oder nicht in vorgegebener Personenzahl eine Anmeldung tätigen, kann auf diese Weise durchgeführt oder veranlasst werden.

Das Steuergerät der Dosiereinrichtung nach Anspruch 1 ist vorteilhafterweise mit einer gewissen Intelligenz ausgestattet, und erlaubt eine Administration oder Verwaltung der Vorgänge einer Anmeldung und/oder einer Abmeldung von Servicekräften an der Anmeldeeinrichtung. Bei der Dosiereinrichtung nach Anspruch 1 kann aber alternativ auch vorgesehen sein, dass das Steuergerät nach Anspruch 1 sehr einfach ausgebildet ist, im einfachsten Falle auch von einem Schalter bereitgestellt ist, und die Administration der Anmeldevorgänge und/oder der Abmeldevorgänge von einer gesonderten Steuereinrichtung, z. B. von einem gesonderten Mikroprozessor, durchgeführt oder administriert werden.

Die erfindungsgemäße Dosiereinrichtung kann eine Zugriffskontrolleinrichtung aufweisen. Die Zugriffskontrolleinrichtung kann zugleich die Anmeldeeinrichtung ausbilden oder diese umfassen, oder mit dieser kooperieren. Bei der erfindungsgemäßen Dosiereinrichtung nach Anspruch 1 ist es aber nicht zwingend erforderlich, dass die Dosiereinrichtung eine Zugriffskontrolleinrichtung aufweist. Es ist insoweit möglich, dass eine erfindungsgemäße Dosiereinrichtung nach Anspruch 1 lediglich eine Anmeldeeinrichtung aufweist, eine Zugriffskontrolleinrichtung aber nicht umfasst. Freilich ist bei einer vorteilhaften Ausgestaltung der Dosiereinrichtung nach Anspruch 1 auch eine Zugriffskontrolleinrichtung vorgesehen, die weiter vorteilhafterweise mit der Anmeldeeinrichtung zusammenfällt.

Eine vorteilhafte Ausführungsform der Erfindung besteht im Wesentlichen darin, dass die Dosiereinrichtung nunmehr eine zusätzliche Kontrolleinrichtung aufweist. Die Zusatz-Kontrolleinrichtung dient der Vornahme einer Prüfung der Zugangsberechtigung der Bedienperson. Damit kann eine Bedienperson sich wirksam an der Dosiereinrichtung nur dann Anmelden, wenn diese zur Vornahme einer Anmeldung autorisiert ist, eine Zugangsberechtigung kennt oder mit sich führt, und die Prüfung der Zugangsberechtigung zu einem positiven Ergebnis führt.

Die Erfindung bezieht sich auf eine Dosiereinrichtung zur Bereitstellung einer Reinigungslösung oder einer Desinfektionslösung. Hierunter wird jede Lösung verstanden, die zur Anwendung in der Gebäudetechnik, insbesondere im Bereich der Gebäudereinigung, also zur Reinigung eines Gebäudes oder von Gebäudeteilen oder von Einrichtungsgegenständen, bzw. im Falle einer Desinfektionslösung zur Desinfektion von Gebäudeflächen oder zur Desinfektion von Personen oder Körperteilen geeignet ist.

Die erfindungsgemäße Dosiereinrichtung umfasst wenigstens einen Eingang zur Verbindung mit einem Behältnis, in dem ein zu dosierendes Medium angeordnet ist. Das zu dosierende Medium kann beispielsweise ein Reinigungsmittelkonzentrat, oder ein Konzentrat eines Desinfektionsmittels sein. Die Dosiereinrichtung weist wenigstens einen Eingang auf. Vorteilhafterweise weist die Dosiereinrichtung mehrere Eingänge auf. Die mehreren Eingänge können entweder jeweils mit einem Behältnis verbunden sein, in dem das gleiche, zu dosierende Medium angeordnet ist. Möglicherweise kann beispielsweise, wenn ein Behältnis entleert wurde, durch ein Überspringen auf das zweite, noch gefüllte Behältnis ein Ausfall vermieden werden, bzw. ein komfortabler Wechsel des Behältnisses oder ein Nachfüllen des Mediums ermöglicht werden.

Von der Erfindung sind allerdings auch solche Dosiereinrichtungen umfasst, bei denen zwei oder mehrere Eingänge zur Verbindung mit Behältnissen vorgesehen sind, in denen unterschiedliche, zu dosierende Medien angeordnet sein können. Insbesondere kann vorgesehen sein, dass mit einer erfindungsgemäßen Dosiereinrichtung dafür gesorgt werden kann, dass sämtliche in dem Gebäude einzusetzende Reinigungs- oder Desinfektionslösungen oder ein Großteil davon von dieser Dosiereinrichtung bereitgestellt werden.

Schließlich kann bei einer Ausführungsform der erfindungsgemäßen Dosiereinrichtung auch vorgesehen sein, dass die Dosiereinrichtung mehrere Eingänge zur Verbindung mit unterschiedlichen Behältnissen aufweist, in denen unterschiedliche Medien angeordnet sind, wobei diese unterschiedlichen Medien jeweils dosiert, sukzessive einem Ausgang zugeführt werden können, um die unterschiedlichen Medien in einem Zielgefäß zu mischen.

Die erfindungsgemäße Dosiereinrichtung umfasst des Weiteren wenigstens einen Ausgang für ein Zielgefäß.

Das Zielgefäß ist das in der Gebäudetechnik einzusetzende Gefäß, oder ein in der Gebäudetechnik einzusetzendes Gerät oder eine Vorrichtung, die ein solches Gefäß oder Teilgefäß aufweist. Das Zielgefäß kann also beispielsweise unmittelbar ein Bodenreinigungsgerät sein, oder von einem Tank oder einem Behältnis für das Bodenreinigungsgerät gebildet sein. Das Zielgefäß kann auch eine Flaschenbefüllanlage, eine Mopp-Aufbereitungsanlage, oder ein Gefäß für Reinigungsflüssigkeit, im einfachsten Falle ein Eimer, oder eine Handsprühflasche sein.

Die erfindungsgemäße Dosiereinrichtung umfasst des Weiteren wenigstens eine Pumpe. Die Pumpe dient dazu, das zu dosierende Medium durch die Dosiereinrichtung hindurch, hin Richtung Zielgefäß, zu fördern. Als Pumpe einer Dosiereinrichtung im Sinne der vorliegenden Patentanmeldung wird jede geeignete Einrichtung zum Fördern des Mediums verstanden. Insbesondere werden hierunter Schlauchpumpen, Kreiselpumpen, Membranpumpen, aber zum Beispiel auch Vakuum-Saugdüsen, die nach dem Venturi-Prinzip arbeiten, oder andere Einrichtungen, die eine Förderung des Mediums vornehmen können, verstanden.

Gemäß der Erfindung ist die Dosiereinrichtung derartig ausgebildet, dass die Pumpe von einem Steuergerät ansprechbar ist. Die Dosiereinrichtung weist also ein Steuergerät im Sinne eines elektronischen Bauelementes auf, welches insbesondere einen Prozessor aufweist.

Weiter ist an der erfindungsgemäßen Dosiereinrichtung eine Bedieneinrichtung angeordnet. Mittels dieser Bedieneinrichtung kann durch eine Bedienperson ein Dosiervorgang initiiert werden. Die Bedieneinrichtung ist insbesondere an der Dosiereinrichtung fest angeordnet, oder fest relativ zu der Dosiereinrichtung angeordnet. Sie kann zum Beispiel an dem Gehäuse der Dosiereinrichtung angeordnet sein.

Die Bedieneinrichtung ist im einfachsten Fall ein Ein-/Ausschalter, der beim Betätigen, d. h. beim Einschalten, einen Dosiervorgang initiiert. An der Bedieneinrichtung können bei einer erfindungsgemäßen Dosiereinrichtung aber auch eine oder mehrere weitere Bedienfunktionen durchgeführt werden, beispielsweise das Einstellen von Parametern, wie Dosierkonzentration, Dosiervolumina, Auswahl von Medien, Mischung von Medien, Eingabe von Namen von Bedienpersonen, Eingabe von Codewörtern, Schlüsselwörtern, oder anderen Prüfungsinformationen.

Gemäß einer vorteilhaften Ausgestaltung der Erfindung verwaltet und/oder administriert das Steuergerät der Dosiereinrichtung die Anmeldevorgänge und/oder die Abmeldevorgänge. Weiter vorteilhaft ist vorgesehen, dass für den Fall, dass eine Dosiereinrichtung nach Anspruch 1 ein Steuergerät aufweist, welches auch eine Zugriffskontrolleinrichtung steuert, dieses Steuergerät mit dem Steuergerät für die Anmeldeeinrichtung zusammenfällt, oder dieses umfasst, oder mit diesem kooperiert.

Weiter vorteilhaft ist vorgesehen, dass die Dosiereinrichtung einen Speicher aufweist, in dem Informationen über die Anmeldevorgänge und/oder über die Abmeldevorgänge speicherbar sind. Auf diese Weise kann insbesondere eine Erfassung von Arbeitszeiten der Bedienpersonen und der Servicekräfte erfolgen.

Gemäß einer weiteren vorteilhaften Ausgestaltung der Erfindung ist die Anmeldeeinrichtung an der Dosiereinrichtung angeordnet. Insbesondere kann die Anmeldeeinrichtung eine Eingabevorrichtung umfassen, zum Beispiel ein alphanumerischer Code, oder lediglich der Namen eines Nutzers, eingebbar ist. Alternativ kann die Anmeldeeinrichtung auch ein Lesegerät aufweisen, beispielsweise einen Fingerabdrucksensor, ein Chipcardlesegerät etc.

Gemäß einer weiteren vorteilhaften Ausgestaltung der Erfindung ist die Anmeldeeinrichtung gesondert von der Dosiereinrichtung angeordnet, und mit dieser verbunden. Eine gesondert angeordnete Anmeldeeinrichtung kann beispielsweise von einer herkömmlichen, oder im weitesten Sinne herkömmlichen Stech-Uhr, oder Stempeluhr gebildet sein. Insoweit kann auf herkömmliche Komponenten zur Arbeitszeiterfassung zurückgegriffen werden. Diese Stechuhr kann über eine Verbindungsleitung mit der Dosiereinrichtung verbunden sein. Über die Verbindungsleitung können Anmelde- oder Abmeldeinformationen, aber auch Dosierinformationen, zwischen der Stempeluhr und der Dosiereinheit übertragen oder ausgetauscht werden. Beispielsweise kann die die gesonderte Anmeldeeinrichtung, insbesondere die Stempeluhr, eine Verwaltung von Zugangsberechtigungen für eine Bedienung der Dosiereinrichtung übernehmen. Andererseits bietet es sich insbesondere an, wenn die Dosiereinrichtung die Verwaltung von Anmelde- und Abmeldeinformationen nach Art und Weise einer herkömmlichen Stempeluhr übernimmt.

Gemäß einer besonders vorteilhaften Ausgestaltung der Erfindung kann bei der erfindungsgemäßen Dosiereinrichtung entweder ein an der Dosiereinrichtung angeordnetes Kommunikationsmodul oder ein der Anmeldevorrichtung zugeordnetes Kommunikationsmodul für eine Übertragung von Informationen an eine entfernt von der Dosiereinrichtung angeordnete Zentrale sorgen. Die zu übertragenden Informationen können insbesondere Informationen über Anmeldevorgänge und/oder über Abmeldevorgänge enthalten, aber insbesondere auch Informationen über Dosiermengen, Dosierzeitpunkte, dosierte Medien etc. Gemeinsam mit Informationen, die zu Dosiervorgängen in Bezug stehen, können insoweit auch Informationen über An- und Abmeldevorgänge an die Zentrale übermittelt werden.

Die Informationen können über ein Kommunikationsmodul insbesondere drahtlos an eine Zentrale übermittelt werden. Die Zentrale kann insbesondere für mehrere Dosiereinrichtungen an unterschiedlichen Orten eine zentrale Verwaltung all dieser Informationen übernehmen. Beispielsweise kann sie sowohl eine Nachbestellung und eine Nachlieferung von zu dosierenden Medien zu geeigneten Zeitpunkten veranlassen - wenn die Behältnisse leer sind -, als auch nach Erfassung der Arbeitszeiten der Bedienperson und der Servicekräfte eine Personalabrechnung und eine Arbeitszeitenverwaltung vornehmen.

Gemäß einer vorteilhaften Ausgestaltung der Erfindung ist an der Dosiereinrichtung des Weiteren eine Zugriffskontrolleinrichtung angeordnet. Die Zugriffskontrolleinrichtung dient der Vornahme einer Prüfung einer Zugangsberechtigung der Bedienperson.

Die Zugangsberechtigung kann im einfachsten Fall ein Zahlencode oder ein alphanummerischer Code sein. Diesen muss die Bedienperson an der Dosiereinrichtung eingeben. Eine Eingabe kann entweder an der Bedieneinrichtung erfolgen, oder an einer gesonderten, weiteren, zusätzlichen Bedieneinrichtung, die der Zugriffskontrolleinrichtung zugeordnet ist, oder Bestandteil der Zugriffskontrolleinrichtung ist.

Für den Fall, dass die zuvor beschriebene Bedieneinrichtung derartig ausgebildet ist, dass hier auch komplexere Informationen eingegeben werden können, beispielsweise alphanummerische Zeichen, ist vorteilhafterweise eine Eingabe der Zugangsberechtigung für die Zugriffskontrolleinrichtung an dieser Bedieneinrichtung möglich.

Die Zugriffskontrolleinrichtung ist der Bedieneinrichtung zugeordnet. Dies bedeutet, dass die Zugriffskontrolleinrichtung eine Prüfung der Zugangsberechtigung vornimmt, und die Bedieneinrichtung im Sinne der Durchführung einer Initiierung eines Dosiervorganges durch die Bedienperson erst dann freischaltet, wenn ein positives Ergebnis einer Prüfung der Zugangsberechtigung der Bedienperson vorliegt.

Die Zugriffskontrolleinrichtung ist insoweit eine Hürde, die die Bedienperson zunächst überwinden muss, um Zugang zu der Bedieneinrichtung oder zu dem Teil der Bedieneinrichtung zu erlangen, der einen Dosiervorgang initiieren kann.

Gemäß der vorteilhaften Ausgestaltung der Erfindung wird die Möglichkeit bereitgestellt, dass nur noch autorisierte Bedienpersonen an der Dosiereinrichtung Dosiervorgänge initiieren können. Dies bedeutet, dass beispielsweise nur noch besonders geschultes Personal, also Bedienpersonen, die für den Umgang mit den gefährlichen Chemikalien, nämlich den zu dosierenden Medien, besondere Kenntnisse erlangt haben, Dosiervorgänge initiieren dürfen. Eine Bedienung durch unautorisierte Bedienpersonen kann damit ausgeschlossen werden.

Gemäß einer weiteren vorteilhaften Ausgestaltung der Erfindung lässt die Dosiervorrichtung eine Initiierung eines Dosiervorganges erst nach erfolgter, autorisierter Anmeldung einer Bedienperson zu. Die erfindungsgemäße Dosiereinrichtung sieht also erstmals überhaupt die Möglichkeit vor, dass sich Bedienpersonen an ihr anmelden können, aber auch anmelden müssen, um Dosiervorgänge durchzuführen. Als Anmeldevorgang wird dabei die Eingabe einer Zugangsberechtigung durch die Bedienperson bezeichnet. Eine erfolgte (oder erfolgreiche) Anmeldung einer Bedienperson ist (erst) dann eingetreten, wenn die Zugriffskontrolleinrichtung nach Vornahme einer Prüfung der Zugangsberechtigung ein positives Prüfungsergebnis vermelden kann.

Die Dosiereinrichtung ist dabei grundsätzlich so ausgebildet, dass für die Initiierung eines Dosiervorganges eine erfolgte oder erfolgreiche Anmeldung der Bedienperson vorausgesetzt wird.

In diesem Zusammenhang ist vorteilhaft vorgesehen, wenn die Dosiereinrichtung eine Verwaltung der an ihr angemeldeten Bedienpersonen vornimmt. Weiter kann vorteilhafterweise vorgesehen sein, dass eine Bedienperson sich von der Dosiervorrichtung auch abmelden kann, bzw. abmelden muss. Die Dosiereinrichtung kann sämtliche Anmeldevorgänge und Abmeldevorgänge der Bedienpersonen verwalten, d. h. erfolgte Anmeldungen und erfolgte Abmeldungen unter Speicherung von Uhrzeit und Datum und Namen der Bedienperson festhalten.

Gemäß einer vorteilhaften Ausgestaltung der Erfindung weist die Dosiereinrichtung einen Speicher auf. Als Speicher wird ein an sich herkömmlicher, elektronischer Baustein bezeichnet, in dem Daten und Informationen abgelegt werden können.

Gemäß dieser Ausführungsform der Erfindung sind in diesem Speicher oder auch einem anderen Speicher Prüfungsinformationen speicherbar. Als Prüfungsinformationen im Sinne der vorliegenden Patentanmeldung werden Informationen bezeichnet, die Ergebnisse einer Prüfung der Zugangsberechtigung einer Bedienperson enthalten, oder enthalten können, oder zu diesen in Bezug stehen. Als Prüfungsinformationen im Sinne der vorliegenden Patentanmeldung werden allerding auch solche Informationen bezeichnet, die Daten enthalten, die bei einer Prüfung der Zugangsberechtigung einer Bedienperson durch die Zugriffskontrolleinrichtung verwendet werden. Diese Prüfungsinformationen können also beispielsweise die hinterlegten, abzufragenden Codes oder die zugelassenen Namen der Bedienpersonen - oder auch Zeitpunkte, zu denen sich bestimmte Bedienpersonen überhaupt erst anmelden dürfen - umfassen.

Bei einer weiteren, vorteilhaften Ausgestaltung der Erfindung enthalten die Prüfungsinformationen Informationen über die Vornahme einer Anmeldung und/oder die Vornahme einer Abmeldung einer Bedienperson an der Dosiereinrichtung, umfassend Informationen über die Bedienperson, insbesondere über den Namen der Bedienperson, Informationen über die Uhrzeit und/oder über das Datum zum Zeitpunkt der Vornahme einer Anmeldung und/oder der Vornahme einer Abmeldung einer Bedienperson.

All diese Prüfungsinformationen können in dem Speicher oder in mehreren Speichern der Dosiereinrichtung abgelegt werden.

Gemäß einer weiteren vorteilhaften Ausgestaltung der Erfindung umfasst die Dosiereinrichtung ein Kommunikationsmodul. Ein solches Kommunikationsmodul kann beispielsweise von einem GSM-Modul, also einem Modul zum drahtlosen Übertragen von Daten über Telefonleitungen oder Internetverbindungen oder anderen Datenleitungen oder Datennetzwerken, bereitgestellt sein. Das Kommunikationsmodul erlaubt ein drahtloses - ggf. auch drahtgebundenes - Senden und/oder Empfangen von Informationen. Insbesondere ermöglicht das Kommunikationsmodul ein Übermitteln von Prüfungsinformationen von der Dosiereinrichtung an eine Zentrale und/oder von einer Zentrale an die Dosiereinrichtung. Beispielsweise kann die Dosiereinrichtung auf Abfrage oder regelmäßig selbstständig die in dem Speicher abgespeicherten Informationen oder einen Teil dieser Informationen an die Zentrale übermitteln.

Von der Zentrale können beispielsweise nachfolgend alle Anmelde- oder Abmeldevorgänge von Bedienpersonen ausgewertet und erfasst werden. So kann beispielsweise auch ein Überblick über Arbeitszeiten von Bedienpersonen, über ein pünktliches Erscheinen, über Arbeitszeiten, etc. erhalten, bzw. festgehalten werden.

Schließlich kann die Zentrale auch von zahlreichen Dosiereinrichtungen entsprechende Informationen empfangen.

Bei einer Ausgestaltung der Erfindung besteht die Möglichkeit, dass von der Zentrale Informationen an die Dosiereinrichtung übermittelt werden, und dort vom Kommunikationsmodul empfangen werden. Beispielsweise kann vorgesehen sein, dass von der Zentrale Informationen, die von der Zugriffskontrolleinrichtung bei der Prüfung der Zugangsberechtigung verwendet werden, an die Dosiereinrichtung übermittelt werden. Nach Empfang dieser Informationen durch das Kommunikationsmodul an der Dosiereinrichtung, können diese Informationen ebenfalls in dem Speicher der Dosiereinrichtung gespeichert werden.

Die Zugriffskontrolleinrichtung kann eine Eingabevorrichtung und/oder eine Leseeinrichtung umfassen. Die Eingabeeinrichtung kann beispielsweise ausgebildet sein, eine Eingabe eines alphanummerischen Codes durch die Bedienperson zu ermöglichen. Alternativ und/oder zusätzlich kann an der Zugriffskontrolleinrichtung eine Leseeinrichtung vorgesehen sein, die beispielsweise biometrische Daten, Chipkarten, RFID-Transponder, Ausweise oder graphische Codes auslesen kann. Beispielsweise kann die Leseeinrichtung von einem Chipkarten-Lesegerät gebildet sein, oder von einem Fingerabdruckprüfungsgerät, wie es in der Mobiltelefonie mittlerweile Standard ist.

Gemäß einer weiteren vorteilhaften Ausgestaltung der Erfindung ist das Zielgefäß von einem Bodenreinigungsgerät oder von einer Mopp-Aufbereitungsanlage oder von einer Flaschenbefülleinrichtung, insbesondere für Handsprühgeräte, oder von einem Eimer oder von einem Gefäß für eine Reinigungslösung bereitgestellt ist.

Gemäß einer weiteren vorteilhaften Ausgestaltung der Erfindung ist die Dosiereinrichtung fest in dem Gebäude angeordnet, in dem die Reinigungs- oder Desinfektionslösung eingesetzt wird. Vorteilhafterweise ist die Dosiereinrichtung wandseitig fest in einem Gebäuderaum des Gebäudes angebracht.

Weiter vorteilhafterweise kann bei einer Ausführungsform der Erfindung vorgesehen sein, dass in einem Speicher der Dosiereinrichtung ein Arbeitszeitenplan für Bedienpersonen hinterlegt ist. Bei dieser Ausführungsform kann vorgesehen sein, dass für den Fall, dass zu einem vorgegebenen Zeitpunkt eine Anmeldung durch eine Bedienperson an der Dosiereinrichtung - entgegen dem Arbeitszeitenplan - nicht erfolgt ist, ein Warnsignal generiert wird. Das Warnsignal kann die Dosiereinrichtung beispielsweise in Form einer Übermittlung von Informationen, unter Zuhilfenahme des Kommunikationsmoduls, an die Zentrale vornehmen. Alternativ kann beispielsweise auch eine Kurznachricht, beispielsweise auch eine SMS oder eine E-Mail an eine bestimmte Zielperson oder eine Zielrufnummer oder an die Zentrale übermittelt werden.

Die Erfindung betrifft gemäß eines weiteren Aspektes ein Verfahren nach dem Oberbegriff des Anspruches 13.

Der Erfindung liegt die Aufgabe zugrunde, ein Verfahren gemäß des Oberbegriffes des Anspruches 13 derartig weiter zu bilden, dass das Verfahren sicherer wird.

Die Erfindung löst die Aufgabe mit den Merkmalen des Kennzeichenteils des Anspruches 13.

Zur Vermeidung von Wiederholungen wird auf die im Zuge der Würdigung der vorangegangenen Ansprüche vorgetragenen Argumente, Erläuterungen, Sachverhalte und Darstellungen verwiesen.

Ein zuvor erwähntes, nicht von Anspruch 1 erfasstes Bodenreinigungsgerät kann insbesondere selbstfahrend oder als walk-behind-Gerät ausgebildet sein. Das Bodenreinigungsgerät dient zum Reinigung einer Bodenfläche, insbesondere unter Zuhilfenahme einer Reinigungsflüssigkeit.

Im Falle einer selbstfahrenden Ausbildung des Bodenreinigungsgerätes ist das Reinigungsgerät insbesondere als AufsitzGerät ausgebildet. Es umfasst in diesem Falle ein Lenkrad und einen Sitz sowie wenigstens einen großen Tank mit einer Reinigungsflüssigkeit. Des weiteren sind Vorrichtungen und Mechanismen vorgegeben, die die Reinigungsflüssigkeit auf die zu reinigende Bodenfläche aufbringen, und das Schmutzwasser entsprechend wieder aufnehmen. Auch können Wisch- und Kehrvorrichtungen, Umwälzvorrichtungen, Pumpen etc. vorhanden sein.

An dem Bodenreinigungsgerät ist eine Anmeldeeinrichtung angeordnet. Die Anmeldeeinrichtung dient der Vornahme einer Anmeldung und/oder einer Abmeldung von Bedienpersonen und/oder von Servicekräften. Beispielsweise kann gemäß der Erfindung vorgesehen sein, dass sich die Bedienperson, die das Bodenreinigungsgerät bedient, zuvor an dem Bodenreinigungsgerät anmelden muss. Dies kann - analog zu dem Anmeldevorgang bei der zuvor beschriebenen Dosiereinrichtung, zum Beispiel dadurch geschehen, dass ein Benutzer einen Berechtigungscode, zum Beispiel einen alphanumerischen Code, eingeben muss. Die Anmeldevorrichtung weist insoweit zum Beispiel eine Eingabevorrichtung, zum Beispiel ein alphanumerisches Tastaturfeld, auf.

Schließlich kann die Anmeldung auch unter Zuhilfenahme eines Lesegerätes, zum Beispiel eines Chipkartenlesegerätes, oder eines Fingerabdrucklesegerätes, erfolgen.

Auf diese Weise kann sichergestellt werden, dass nur autorisierte Bedienpersonen, beispielsweise Bedienpersonen, die zuvor eine technische Einweisung in die Bedienung des Bodenreinigungsgerätes erfahren haben, dieses auch bedienen dürfen.

Alternativ und/oder zusätzlich ist gemäß der Erfindung auch vorgesehen, dass über die Anmeldeeinrichtung eine Anmeldung und/oder Abmeldung von Servicekräften vorgenommen werden kann. So kann beispielsweise vorgesehen sein, dass ein Trupp von Servicekräften, die gemeinsam ein Objekt reinigen sollen, zu Beginn ihrer Tätigkeit eine Anmeldung unmittelbar an der Anmeldeeinrichtung des Bodenreinigungsgerätes vornehmen. Dieses kann die gesamten An- und Abmeldevorgänge verwalten und administrieren. Insbesondere kann das Bodenreinigungsgerät einen Speicher aufweisen, in dem Informationen über Anmelde- und Abmeldevorgänge gespeichert werden.

Weiter vorteilhafterweise weist das Bodenreinigungsgerät ein Kommunikationsmodul auf, insbesondere ein GSM-Modul, mit dem drahtlos oder drahtgebunden Informationen über An- oder Abmeldevorgänge an eine Zentrale übermittelt werden können. Ggf. kann auch vorgesehen sein, dass das Bodenreinigungsgerät über das Kommunikationsmodul Informationen von der Zentrale empfängt, beispielsweise Autorisationsinformationen.

Insbesondere sei darauf hingewiesen, dass auch das Bodenreinigungsgerät eine Steuerung aufweist, vorteilhafterweise einen Speicher aufweist, und die Anmeldeinrichtung an dem Bodenreinigungsgerät vorteilhafterweise eine Eingabevorrichtung zur Eingabe eines alphanumerischen Codes und/oder ein Lesegerät, zum Beispiel ein Chipkartenlesegerät, oder einen Fingerabdruckscanner umfasst.

Der guten Ordnung halber sei angemerkt, dass das Bodenreinigungsgerät auch als walk-behind-Gerät ausgebildet sein kann. Dieses kann, muss aber nicht zwingend, einen Antrieb aufweisen. Die Bedienperson läuft hinter dem als walk-behind-Gerät ausgebildeten Bodenreinigungsgerät hinterher, und kann dieses insoweit steuern.

Als Bodenreinigungsgerät im Sinne der Erfindung werden auch Staubsauger, Kehrmaschinen, Wischmopps, Bürstenreinigungsanlagen etc. angesehen.

Weitere Vorteile ergeben sich anhand der nicht zitierten Unteransprüche, sowie aus der nachfolgenden Beschreibung des in den Figuren dargestellten Ausführungsbeispiels. Darin zeigen:
- Fig. 1: in einer schematischen, blockschaltbildartigen Ansicht eine erfindungsgemäße Dosiereinrichtung, bei der ein Putzeimer als mit einer Reinigungslösung zu befüllendes Gefäß, und eine Zentrale vorgesehen ist,
- Fig. 2: in einer Darstellung gemäß Fig. 1 ein weiteres Ausführungsbeispiel einer erfindungsgemäßen Dosiereinrichtung, bei der eine Anmeldeeinrichtung zur Vornahme von Anmelde- oder Abmeldevorgängen vorgesehen,
- Fig. 3: ein weiteres Ausführungsbeispiel in einer Darstellung gemäß Fig. 1, wobei eine von der Dosiereinrichtung 10 räumlich getrennte, aber mit dieser verbundene Anmeldeeinrichtung vorgesehen ist,
- Fig. 4: in einer Darstellung gemäß Fig. 3 ein weiteres Ausführungsbeispiel einer erfindungsgemäßen Dosiereinrichtung, bei der der Anmeldeeinrichtung ein Kommunikationsmodul zugeordnet ist, und wobei an der Dosiereinrichtung zusätzlich eine Zugriffskontrolleinrichtung angeordnet ist, und
- Fig. 5: in einer schematischen Darstellung ein Ausführungsbeispiel eines Bodenreinigungsgerätes, mit einer Anmeldeeinrichtung zur Vornahme von Anmelde- und/oder Abmeldevorgängen von Bedienpersonen oder Servicekräften, und mit einem Kommunikationsmodul zwecks Übermittlung von Informationen an eine Zentrale.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

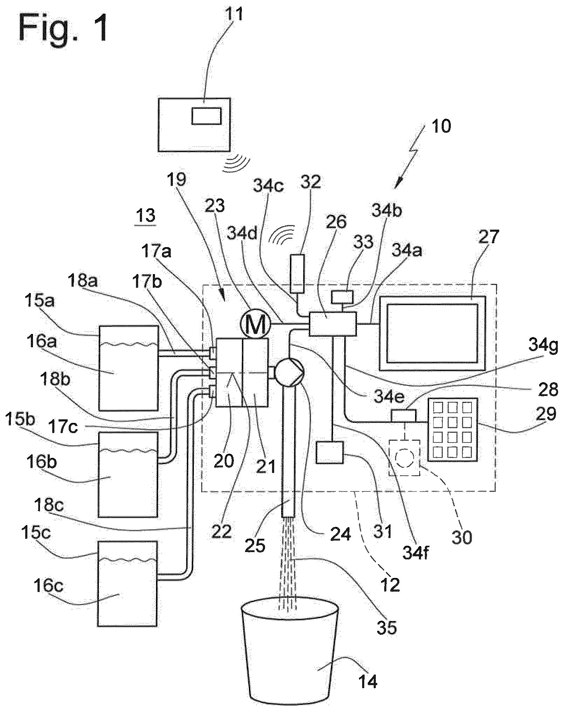

Die Dosiereinrichtung ist in Figur 1 in ihrer Gesamtheit mit 10 bezeichnet. Die distanziert von der Dosiereinrichtung 10, beispielsweise in einem weit entfernten Gebäude angeordnete Zentrale, ist in Figur 1 mit 11 bezeichnet.

Die Dosiereinrichtung 10 kann ein in Figur 1 lediglich schematisch angedeutetes, gestrichelt dargestelltes Gehäuse 12 aufweisen. Mit ihrem Gehäuse 12 kann die Dosiereinrichtung 10 beispielsweise an der Wand 13 eines Gebäuderaumes befestigt werden. Die Dosiereinrichtung 10 dient der Abgabe oder Herstellung einer Reinigungsmittellösung 35, oder einer Desinfektionslösung. Insbesondere soll bei dem Ausführungsbeispiel der Figur 1 ein Reinigungsgefäß, nämlich gemäß Figur 1 ein Eimer 14, mit einer Reinigungsmittellösung, nämlich mit Wischwasser für die Bodenreinigung, befüllt werden.

Die Dosiereinrichtung 10 der Figur 1 weist drei Eingänge 17a, 17b, 17c auf, die über Verbindungsleitungen 18a, 18b, 18c mit Behältnissen 15a, 15b, 15c verbunden sind. In jedem Behältnis ist ein Medium 16a, 16b, 16c angeordnet. Die drei Medien 16a, 16b, 16c können gleich oder unterschiedlich ausgebildet sein.

Auch die Zahl der Anschlüsse 17a, 17b, 17c kann entsprechend der Zahl der Behältnisse 15a, 15b, 15c, bei anderen, nicht dargestellten Ausführungsbeispielen, beliebig angepasst sein.

Bei dem Ausführungsbeispiel der Dosiereinrichtung 10 gemäß Figur 1 weist die Dosiereinrichtung 10 einen Mischverteiler 19 auf, wie er auch aus den Patentanmeldungen der Anmelder mit den Aktenzeichen DE 10 2011 108 396.4, DE 10 2011 119 021.3 und DE 10 2011 122 921.7 vorbekannt ist, deren Inhalt hiermit, auch zum Zwecke der Bezugnahme auf einzelne Merkmale, in den Inhalt der vorliegenden Patentanmeldung mit eingeschlossen wird.

Analog zu den in den vorgenannten Patentanmeldungen vorbeschriebenen Mischverteilern ist auch bei dem Ausführungsbeispiel des Mischverteilers 19 gemäß Figur 1 der vorliegenden Patentanmeldung eine Eingangsscheibe 20 vorgesehen, an der die drei Eingänge 17a, 17b, 17c fest angeordnet sind. Relativ zu der Eingangsscheibe 20 ist um eine Drehachse 22 eine Ausgangsscheibe 21 drehbar, die eine Eingangsseite einer Pumpe 24 - entsprechend den unterschiedlichen Rotationsstellungen der Ausgangsscheibe 21 - mit den unterschiedlichen Eingängen 17a, 17b, 17c in kommunikative Verbindung bringen kann. Eine Drehung der Ausgangsscheibe erfolgt unter Zwischenschaltung eines Motors 23.

Beim Betätigen der Pumpe 24 wird das Medium zu dem Ausgang oder Auslass 25 der Dosiereinrichtung gefördert.

Andere, nicht dargestellte Ausführungsbeispiele von erfindungsgemäßen Dosiereinrichtungen weisen lediglich ein angeschlossenes Behältnis auf. Auch sind Ausführungsbeispiele von Dosiereinrichtungen von der Erfindung umfasst, bei denen ein Mischverteiler 19 nicht vorhanden ist.

Die Erfindung umfasst auch weitere, nicht dargestellte Ausführungsbeispiele von Dosiereinrichtungen, bei denen eine oder mehrere Dosierpumpen jeweils ein Medium oder mehrere Medien zur Herstellung von Reinigungs- oder Desinfektionslösungen fördern können. Die in Frage kommenden Pumpen umfassen Schlauchpumpen oder andere geeignete Pumpen herkömmlicher Bauart. Als Pumpen im Sinne der Erfindung werden auch andere Fördereinrichtungen verstanden, bei denen beispielsweise unter Zuhilfenahme einer Venturi-Düse oder einer Vakuumsaug-Düse oder eines Zumischgerätes eine Dosierung bzw. Förderung eines Mediums erfolgt.

Jede Dosiereinrichtung der erfindungsgemäßen Art weist allerdings zwingend eine Pumpe 24 auf. Dabei kann es sich beispielsweise um eine Schlauchpumpe, aber auch um andere, geeignete und in Frage kommende Pumpe herkömmlicher Bauart handeln.

Die Dosiereinrichtung 10 gemäß Figur 1 weist eine Steuerung 26 auf, die insbesondere einen Mikroprozessor aufweist. Die Steuerung 26 erhält - ebenso wie die anderen elektrischen oder elektronischen Geräte der Dosiereinrichtung 10 - die elektrische Leistung von einer nicht dargestellten Spannungsversorgung, nämlich in der Regel von dem Netzanschluss des Gebäudes, in dem die Dosiereinrichtung 10 montiert ist.

Die Dosiereinrichtung 10 der Figur 1 weist eine Bedieneinrichtung 27 auf, die die Eingabe mehrerer unterschiedlicher Parameter ermöglicht, in jedem Fall aber dazu ausgebildet ist, einen Dosiervorgang initiieren zu können. Im einfachsten Fall ist die Bedieneinrichtung 27 als ein Ein-/Ausschalter ausgebildet. Diese ist über eine Steuerleitung 34a mit der Steuerung 26 verbunden.

Die erfindungsgemäße Dosiereinrichtung 10 gemäß Figur 1 weist darüber hinaus eine Zugangskontrolleinrichtung 28 auf. Diese ist bei dem Ausführungsbeispiel als gesondertes, elektronisches Bauelement dargestellt. Sie kann aber bei anderen, nicht dargestellten Ausführungsbeispielen der Erfindung auch Bestandteil der Steuerung 26 sein. Die Zugriffskontrolleinrichtung 28 ist mit einer gesonderten Eingabevorrichtung 29 verbunden, die ausweislich Figur 1 ein Tastaturfeld aufweist. Hier können beispielsweise alphanummerische Codes eingegeben werden. Alternativ kann die Eingabevorrichtung 29 auch mit der Bedieneinrichtung 27 zusammenfallen, bzw. in letztere integriert sein. Gestrichelt dargestellt ist in Figur 1 darüber hinaus ein Lesegerät 30, das ebenfalls mit der Zugangskontrolleinrichtung 28 verbunden ist. Das Lesegerät 30 kann beispielsweise ein Fingerabdrucklesegerät umfassen. Bei anderen Ausführungsbeispielen der Erfindung können auch mehrere, unterschiedliche Eingabevorrichtungen, bzw. Lesegeräte vorhanden sein, oder miteinander kombiniert werden.

Gemäß dem Ausführungsbeispiel der Figur 1 ist die Zugriffskontrolleinrichtung 28 über eine Steuerleitung 34g mit der Steuerung 26 verbunden.

Die Dosiereinrichtung 10 der Figur 1 weist darüber hinaus ein Speicherelement 31 auf, das über eine Steuerleitung 34f mit der Steuerung 26 verbunden ist. Bei anderen Ausgestaltungen der Erfindung kann der Speicher 31 auch unmittelbar in die Steuerung 26 integriert sein.

Schließlich weist die Dosiereinrichtung 10 gemäß Figur 1 auch ein Kommunikationsmodul 32 auf. Dieses ist über eine Steuerleitung 34c mit der Steuerung 26 verbunden. Das Kommunikationsmodul 32 dient bei dem Ausführungsbeispiel der Figur 1 einem drahtlosen Übermitteln von Informationen an die Zentrale 11 und/oder einem drahtlosen Empfangen von Informationen von der Zentrale 11.

Schließlich weist die Dosiereinrichtung 10 gemäß Figur 1 auch noch ein angedeutetes Zeitmodul 33 auf, welches über eine Steuerleitung 34b mit der Steuerung 26 verbunden ist. Das Zeitmodul soll - lediglich angedeutet - die jeweils aktuelle Zeit und das Datum erfassen können, damit diese Zeitinformationen in Bezug zu Anmeldevorgängen und Abmeldevorgängen von Bedienpersonen gespeichert werden können. Selbstverständlich kann das Zeitmodul 33 Bestandteil der Steuerung 26 sein, oder auch Bestandteil eines anderen Elementes, beispielsweise Bestandteil der Zugriffskontrolleinrichtung 28.

Der Vollständigkeit halber sei noch angemerkt, dass der Motor 23 über eine Steuerleitung 34d mit der Steuerung 26 verbunden ist, und die Pumpe 24 über eine Steuerleitung 34e mit der Steuerung 26 verbunden ist.

Die Funktionsweise der Vorrichtung 10 gemäß Figur 1 ist wie folgt: Wenn sich eine Bedienperson zwecks Initiierung eines Dosiervorganges an die Dosiereinrichtung 10 begibt, ist es zunächst einmal erforderlich, dass über die Eingabevorrichtung 29 oder das Lesegerät 30 eine Eingabe des Berechtigungscodes erfolgt. Im Zuge der Eingabe wird die Zugriffskontrolleinrichtung 28 die Berechtigung der Bedienperson prüfen. Wenn die Prüfung der Berechtigung ein negatives Ergebnis erbringt, bleibt die Dosiereinrichtung für diese Bedienperson gesperrt. Insbesondere ist ihr dann die Bedieneinrichtung 27 nicht zugänglich. Die Bedienperson kann in diesem Falle keinen Dosiervorgang initiieren.

Stellt die Zugriffskontrolleinrichtung 28 allerdings fest, dass die Bedienperson in autorisierter Weise an die Dosiereinrichtung 10 herangetreten ist, gibt die Zugriffskontrolleinrichtung 28 die Bedieneinrichtung 27 frei. Die Bedienperson kann nun einen Dosiervorgang initiieren und beispielsweise ein Zielgefäß 14 in Form eines Eimers mit der Reinigungslösung befüllen.

Zugleich kann die Zugriffskontrolleinrichtung 28 und/oder die Steuerung 26 Informationen, die in Bezug zu dem vorgenommenen Anmeldevorgang der Bedienperson stehen, in dem Speicher 31 ablegen. Dabei kann es sich insbesondere um Informationen handeln, welche Bedienperson zu welchem Zeitpunkt, einschließlich Datum und Uhrzeit, an welcher Dosiereinrichtung 10 eine Anmeldung oder eine Abmeldung vorgenommen hat. Diese Daten können zum Beispiel sämtliche An- und Abmeldevorgänge und deren Zeitpunkte enthalten, und beispielsweise gesammelt, ggf. auch auf Anforderung durch die Zentrale 11, über das Kommunikationsmodul 32 an die Zentrale 11 übermittelt werden. Möglich ist allerdings auch, dass Informationen über An- und Abmeldevorgänge jeweils in Echtzeit, also online, ohne Zeitverzögerung, über das Kommunikationsmodul 32 an die Zentrale 11 übermittelt werden.

Eine Verwaltung der An- und Abmeldevorgänge der Bedienperson kann entweder mittels der Steuerung 26 oder mittels einem anderen elektronischen Bauelement an der Dosiereinrichtung 10 erfolgen. Alternativ kann eine Verwaltung der An- und Abmeldevorgänge der Bedienperson an der Dosiereinrichtung 10 aber auch in der distanziert von der Dosiereinrichtung angeordneten Zentrale 11 erfolgen.

Bei dem Ausführungsbeispiel der Figur 1 wird das Zielgefäß 14 von einem Eimer bereitgestellt. Alternativ kann das Zielgefäß auch von einem Bodenreinigungsgerät, von einer Mopp-Aufbereitungsanlage oder von einer Flaschenbefüllanlage bereitgestellt sein.

Bei dem Ausführungsbeispiel der Figur 1 dient die Dosiereinrichtung 10 der Abgabe einer Reinigungsmittellösung, bei der aus dem Ausgang 25 der Dosiereinrichtung unmittelbar ein Gemisch 35 von Wasser mit Reinigungsmittelkonzentrat, also eine fertige Reinigungsmittellösung in vorgegebener Konzentration, abgegeben wird. Hierzu kann insbesondere vorgesehen sein, dass ein Behältnis 15a mit Reinigungsmittelkonzentrat 16a befüllt ist, und ein anderes Behältnis 15b mit Wasser 16b befüllt ist. In diesem Zusammenhang sei angemerkt, dass auch eine unmittelbare Verbindung des Eingangsanschlusses 17b mit einer Wasserleitung, ggf. unter Zwischenschaltung einer Rohrtrenneinrichtung, denkbar ist.

Bei anderen, nicht dargestellten Ausführungsbeispielen der Erfindung wird von der Dosiereinrichtung ein Reinigungsmittelkonzentrat oder ein Desinfektionsmittel abgegeben, wobei die Desinfektionslösung oder die Reinigungslösung erst durch Mischung mit Wasser oder einem anderen Fluid in dem Zielgefäß zustande kommt.

Bei dem Ausführungsbeispiel der Figur 1 sind in den drei Behältnissen 15a, 15b, 15c drei unterschiedliche oder zwei oder drei gleiche Medien 16a, 16b, 16c angeordnet. Hierbei kann es sich beispielsweise um unterschiedliche Bestandteile einer erst in dem Zielgefäß 14 zu mischenden Reinigungsmittellösung handeln. Alternativ kann ein Medium 16a auch von einem Reinigungsmittelkonzentrat und ein anderes Medium 16b, zum Beispiel von einem Desinfektionsmittelkonzentrat bereitgestellt sein.

Für den Fall, dass in mindestens zwei der Behältnisse 15a, 15b, 15c gleiche Medien 16a, 16b, 16c angeordnet sind, kann dies einer redundanten Medienbereitstellung zur Absicherung der Funktion der Dosiereinrichtung dienen.

Die Zentrale 11 kann weit entfernt von dem Gebäude angeordnet sein, in sich die Dosiereinrichtung 10 befindet. Insbesondere kann eine Zentrale 11 eine Vielzahl derartiger Dosiereinrichtungen 10 verwalten.

Die Zentrale 11 kann es auch übernehmen, die Dosiereinrichtung 10 mit Informationen zu versehen, die die Zugriffskontrolleinrichtung 28 in Folge ihrer Prüfung einer Zugangsberechtigung einer Bedienperson anwendet. Die datentechnische Verarbeitung und Verwaltung dieser Informationen erfolgt durch die Steuerung 26.

Die Zugangskontrolleinrichtung 28 kann integraler Bestandteil der Steuerung 26 sein. Insbesondere kann eine entsprechende Programmierung der in der Steuerung 26 erfolgen. Letztere Ausführung ist insbesondere vorteilhaft, wenn die Eingabevorrichtung 29 der Zugriffskontrolleinrichtung 28 unmittelbar von der Bedienvorrichtung 27 breitgestellt wird.

In diesem Falle weist die Bedieneinrichtung 27 zwei Funktionsebenen auf: Eine erste Funktionsebene, die im Prinzip für jede Bedienperson zugänglich ist, ermöglicht nur die Eingabe einer Berechtigung, z. B. eines alphanummerischen Codes.

Eine zweite Funktionsebene der Bedieneinrichtung 27 ist erst erreichbar, wenn der Code erfolgreich eingegeben wurde und der Anmeldevorgang abgeschlossen ist.

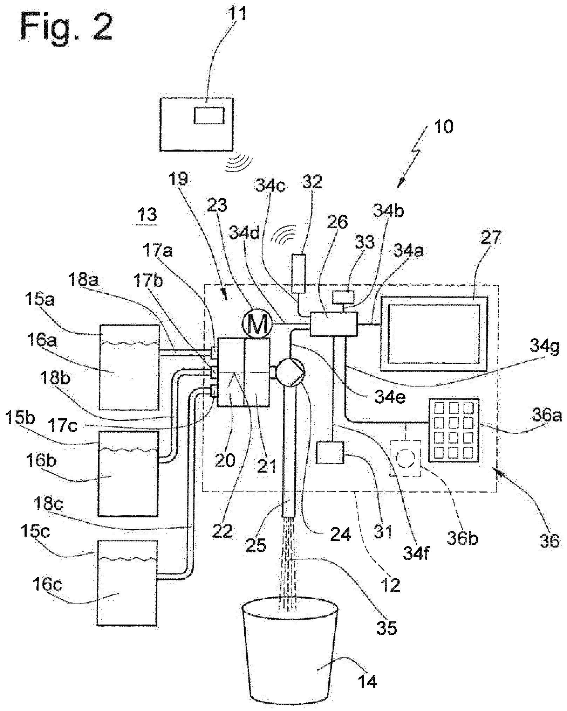

Ausweislich des Ausführungsbeispiels der Fig. 2 ist bei der dort dargestellten Dosiereinrichtung anstelle einer Zugriffskontrolleinrichtung eine Anmeldeeinrichtung 36 vorgesehen. Die Anmeldeeinrichtung 36 umfasst eine Eingabevorrichtung 36a zur Eingabe eines alphanumerischen Codes, sowie alternativ und/oder zusätzlich ein Lesegerät 36b, zum Beispiel zum Lesen eines Fingerabdruckes oder zum Lesen einer Chipkarte oder einer Magnetkarte oder dergleichen.

Die Anmeldevorrichtung 36 dient dazu, Bedienpersonen und/oder Servicekräfte an der Dosiereinrichtung 10 anzumelden und/oder abzumelden. Die zentrale Steuerung 26 kann diese Anmeldevorgänge und/oder Abmeldevorgänge sowie den entsprechenden Zeitpunkt erfassen, im Speicher 31 speichern, und/oder über das Kommunikationsmodul 32 an die Zentrale 11 übermitteln. Bei dem Ausführungsbeispiel der Erfindung gemäß Fig. 2 ist keine Zugriffskontrolleinrichtung 28 gemäß Fig. 1 erforderlich. Hier kann die Dosiereinrichtung 10 bei dem Ausführungsbeispiel der Fig. 2 über die Bedieneinrichtung 27 unmittelbar bedient werden.

In einem weiteren Ausführungsbeispiel kann die Dosiereinrichtung 10 gemäß Fig. 2 - zusätzlich zur Anmeldevorrichtung 36 - auch mit einer Zugriffskontrollvorrichtung 28 der zuvor beschriebenen Art gemäß Fig. 1 ausgestattet sein. Dann macht es insbesondere Sinn, die Anmeldevorrichtung 36 und die Zugriffskontrolleinrichtung 28 von einem gemeinsamen Bauelement bereitzustellen, oder teilweise bereitzustellen, oder miteinander zu verbinden.

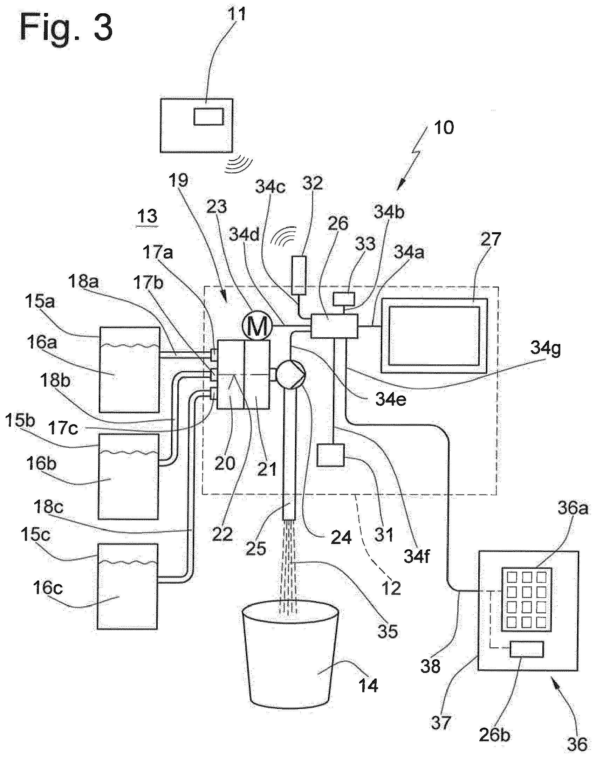

Bei dem Ausführungsbeispiel gemäß Fig. 3 ist die Anmeldevorrichtung 36 gesondert von der Dosiereinrichtung 10 angeordnet, und über eine Verbindungsleitung 38 mit dieser verbunden. Hier ist die Anmeldeeinrichtung 36 wiederum mit einer alphanumerischen Eingabevorrichtung 36a ausgestattet, die zum Beispiel in einem Gehäuse 37 untergebracht ist. Die zentrale Steuerung 26 der Dosiereinrichtung 10 übernimmt bei diesem Ausführungsbeispiel die Verwaltung und Administration der An- und Abmeldevorgänge an der Anmeldevorrichtung 36. Alternativ und/oder zusätzlich kann auch an der Anmeldevorrichtung 36 eine weitere Steuerung 26b vorgesehen sein, die die An- und Abmeldevorgänge administriert. Diese Steuerung 26b kann über die Verbindungsleitung 38 mit der Steuerung 26 kommunizieren.

Denkbar und von der Erfindung auch umfasst, ist, wenn die Steuerung 26b an der Anmeldeeinrichtung 36 teilweise oder vollständig die Aufgabe übernimmt, die an sich die Steuerung 26 der Dosiereinrichtung 10 ausführt, oder ausführen sollte. Hier liegt es im Belieben des Fachmanns, eine entsprechende Aufgabenverteilung zwischen ggf. mehreren vorgesehenen Steuerungen 26 durchzuführen.

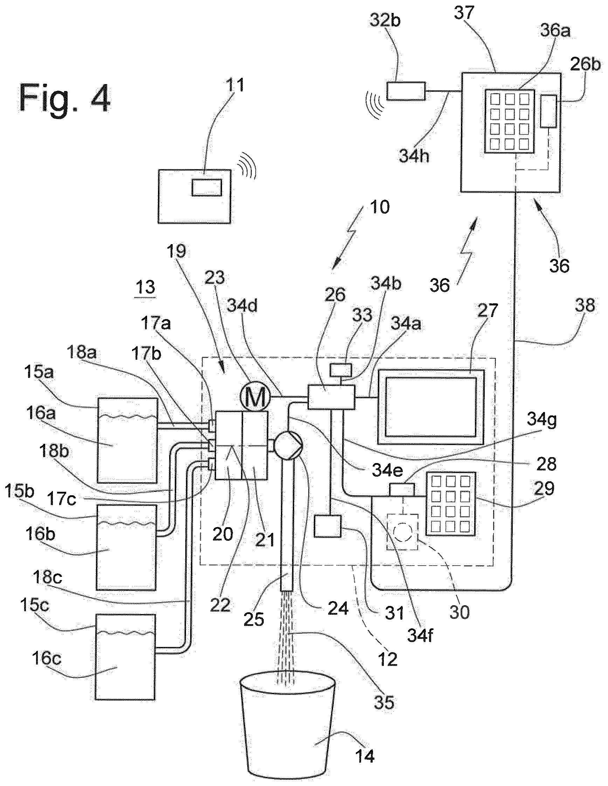

Das Ausführungsbeispiel der Fig. 4 zeigt schließlich, dass eine wiederum gesondert von der Dosiereinrichtung 10 ausgebildete und angeordnete Anmeldeeinrichtung 36 ein Kommunikationsmodul 32b aufweist, welches mit der Zentrale 11 kommuniziert. Hier ist es nicht erforderlich, dass die Dosiereinrichtung 10 weiterhin ein Kommunikationsmodul aufweist. Die Dosiereinrichtung 10 weist bei diesem Ausführungsbeispiel zusätzlich auch eine Zugriffskontrolleinrichtung 28 auf.

Sämtlichen Ausführungsbeispielen der Figuren 1 bis 4 ist gemeinsam, dass eine Übermittlung von Informationen von der Dosiereinrichtung 10 oder von der Anmeldeeinrichtung 36 an die Zentrale 11 über ein Kommunikationsmodul 32, 32b erfolgt. Die zu übermittelnden Informationen können Prüfungsinformationen umfassen, wie sie zu dem Ausführungsbeispiel der Fig. 1 beschrieben sind. Sie können alternativ oder zusätzlich auch Informationen über An- und Abmeldevorgänge, insbesondere deren Zeitpunkte umfassen, und zwar sowohl bzgl. Bedienperson als auch bzgl. Servicekräften.

Schließlich können auch Dosierinformationen übermittelt werden, also Informationen, die einen Bezug zu erfolgten Dosiervorgängen aufweisen, wie beispielsweise dosierte Medien, Dosiervolumina, Dosierzeitpunkte etc. All diese Informationen können an die Zentrale 11 übermittelt, und von dieser zentral verwaltet werden.

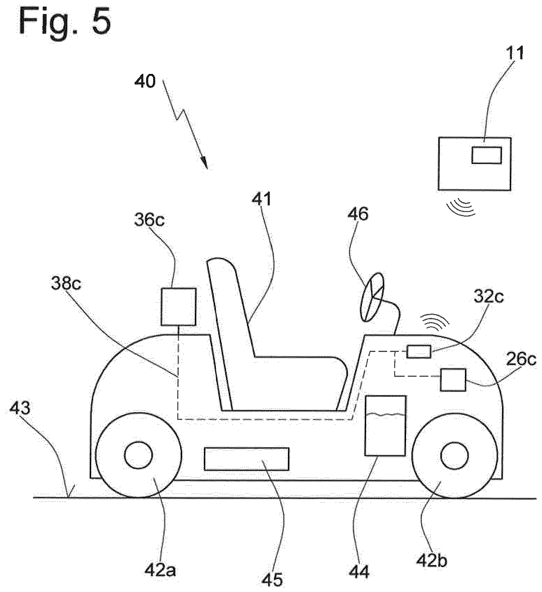

Ausweislich Fig. 5 soll ein Bodenreinigungsgerät 40 gemäß der Erfindung beschrieben werden, welches dort als Aufsitzgerät dargestellt ist. Das Bodenreinigungsgerät 40 umfasst einen Sitz 41, auf dem eine nicht dargestellte Bedienperson Platz nehmen kann. Das Bodenreinigungsgerät 40 umfasst zwei Räder 42a, 42b, mit denen das Bodenreinigungsgerät 40 entlang der zu reinigenden Bodenfläche 43 bewegbar ist. Eine Steuerung erfolgt über ein Lenkrad 46.

Das Bodenreinigungsgerät weist wenigstens einen Tank 44, in dem Reinigungsflüssigkeit angeordnet ist. Ggf. kann auch ein in Fig. 5 nicht dargestellter weiterer, oder mehrere zusätzliche Behältnisse vorgesehen sein, zum Beispiel zur Unterbringung von verschmutzter Flüssigkeit.

Des weiteren sind - lediglich schematisch angedeutet - optional Umwälzmittel 45 vorgesehen, mit denen - auf in Fig. 5 nicht dargestellte Weise - Reinigungsflüssigkeit auf die Bodenfläche 43 aufgebracht, und von dieser aufgenommen werden kann. Schließlich können auch Wisch- oder Reinigungsvorrichtungen, insbesondere mechanischer Art, wie zum Beispiel Besen, Schwämme etc., vorgesehen sein, mit denen zum Beispiel auch eine mechanische Kraft auf die Bodenfläche 43 ausgeübt werden kann.

Das Bodenreinigungsgerät 40 gemäß Fig. 5 weist eine Steuerung 26c auf, die über eine Verbindungsleitung 38c mit einer ebenfalls an dem Bodenreinigungsgerät 40 angeordneten Anmeldeeinrichtung 36c verbunden ist. Die Anmeldeeinrichtung 36c ist in Fig. 5 lediglich schematisch darstellt, und entspricht im wesentlichen der in den Figuren 2 bis 4 dargestellten Anmeldeeinrichtungen 36. Wiederum können Eingabevorrichtungen oder Lesegeräte vorgesehen sein, die in Fig. 5 nicht dargestellt sind. Die Anmeldevorrichtung 36c ist über die Verbindungsleitung 38c mit einer Zentrale 26c verbunden, die die Bedienfunktionen des Bodenreinigungsgerätes 40 zentral steuert. Der Steuerung 26c ist ausweislich Fig. 5 ein Kommunikationsmodul 32c zugeordnet, welches drahtlos, bei anderen Ausführungsbeispielen auch drahtgebunden, mit einer schematisch dargestellten Zentrale 11 kommunizieren kann. Infolge dieser Kommunikation, zum Beispiel unter Zuhilfenahme eines GSM-Moduls, können Informationen über Anmelde- oder Abmeldevorgänge von Bedienpersonen oder von Servicekräften von der Bodenreinigungsvorrichtung 40 an die Zentrale 11 übermittelt werden.

Die Anmeldevorrichtung 36a ermöglicht, dass sich ein gesamtes Team von Servicekräften - einzeln - zentral an dem Bodenreinigungsgerät 40 anmeldet bzw. abmeldet. Hier kann insbesondere eine Zeiterfassung - unter Berücksichtigung der Zeitpunkte, zu denen Anmelde- und Abmeldevorgänge von Servicekräften durchgeführt werden - erfolgen. Eine zentrale Verwaltung und Erfassung der Arbeitszeiten kann unter Zuhilfenahme der Zentrale 26c entweder in einem in Fig. 5 nicht dargestellten Speicher an dem Bodenreinigungsgerät 40 erfolgen, oder, vorteilhafterweise, in der Zentrale 11. Die Zentrale 11 kann mehrere Bodenreinigungsgeräte 40 der in Fig. 5 dargestellten Art, ggf. aber auch zusätzlich und/oder alternativ mehrere Dosiereinrichtungen 10 der in Fig. 1 bis 4 dargestellten Art gemeinsam verwalten.

Fig. 5 zeigt - lediglich exemplarisch - ein Bodenreinigungsgerät, welches selbstfahrend ausgebildet ist. Von der Erfindung sind auch umfasst andere Bodenreinigungsgeräte, die beispielsweise als walk-behind-Geräte ausgebildet sind. Als Bodenreinigungsgerät im Sinne der vorliegenden Patentanmeldung wird auch jede andere geeignete Vorrichtung angesehen, mit der eine Bodenfläche reinigbar ist. Hierzu gehören insbesondere auch Staubsauger, Wischgeräte, Kehrmaschinen, Mopps, oder Wischvorrichtungen etc.

## Patentansprüche

1. Dosiereinrichtung (10) zur Bereitstellung einer Reinigungs- oder Desinfektionslösung (35), insbesondere zur Anwendung in der Gebäudetechnik, umfassend wenigstens einen Eingang (17a) zur Verbindung mit einem Behältnis (15a), in dem ein zu dosierendes Medium (16a) angeordnet ist, und wenigstens einen Ausgang (25) für ein Zielgefäß (14), weiter umfassend wenigstens eine Pumpe (24), die von einem Steuergerät (26) ansprechbar ist, wobei an der Dosiereinrichtung eine Bedieneinrichtung (27) zur Initiierung eines Dosiervorganges durch eine Bedienperson angeordnet ist, **dadurch gekennzeichnet, dass** der Dosiereinrichtung eine Einrichtung (36, 36a,36b) zur Vornahme einer Anmeldung und einer Abmeldung von Bedienpersonen und/oder von Servicekräften zugeordnet ist.

2. Dosiereinrichtung (10) nach Anspruch 1, **dadurch gekennzeichnet, dass** das Steuergerät (26) die Anmeldevorgänge und die Abmeldevorgänge verwaltet und/oder administriert und/oder die Arbeitszeiten der angemeldeten Servicekräfte erfasst.

3. Dosiereinrichtung (10) nach Anspruch 1 oder 2, **dadurch gekennzeichnet, dass** die Dosiereinrichtung einen Speicher (31) aufweist, in dem Informationen über die Anmeldevorgänge und/oder über die Abmeldevorgänge speicherbar sind.

4. Dosiereinrichtung (10) nach einem der Ansprüche 1 bis 3, **dadurch gekennzeichnet, dass** die Anmeldeeinrichtung (36, 36a, 36b) an der Dosiereinrichtung (10) angeordnet ist.

5. Dosiereinrichtung (10) nach einem der Ansprüche 1 bis 4, **dadurch gekennzeichnet, dass** die Anmeldeeinrichtung (36, 36a, 36b) gesondert von der Dosiereinrichtung angeordnet und mit dieser verbunden ist.

6. Dosiereinrichtung (10) nach einem der Ansprüche 1 bis 5, **dadurch gekennzeichnet, dass** die in dem Speicher (31) zu speichernden Informationen über Anmeldevorgänge und Abmeldevorgänge, Informationen über die Nutzer und/oder über die Servicekräfte und/oder Informationen über die Uhrzeit und/oder Informationen über das Datum und/oder über den Zeitpunkt einer Vornahme einer Anmeldung und einer Abmeldung eines Nutzers oder einer Servicekraft enthalten.

7. Dosiereinrichtung (10) nach einem der Ansprüche 1 bis 6, **dadurch gekennzeichnet, dass** die Dosiereinrichtung und/oder die Anmeldeeinrichtung (36, 36a, 36b) ein Kommunikationsmodul (32, 32b), insbesondere ein GSM-Modul, zum drahtlosen und/oder drahtgebundenen Senden und/oder Empfangen von Informationen über Anmeldevorgänge und/oder über Abmeldevorgänge, insbesondere für einen ein-direktionalen und/oder einen bi-direktionalen Austausch solcher Informationen zwischen der Dosiereinrichtung (10) und einer Zentrale (11), aufweist.

8. Dosiereinrichtung (10) nach einem der Ansprüche 1 bis 7, **dadurch gekennzeichnet, dass** an der Dosiereinrichtung eine Zugriffskontrolleinrichtung (28) zur Vornahme einer Prüfung der Zugangsberechtigung der Bedienperson angeordnet ist, die der Bedieneinrichtung zugeordnet ist.

9. Dosiereinrichtung (10) nach Anspruch 8, **dadurch gekennzeichnet, dass** die Dosiereinrichtung einen Speicher (31) aufweist, in dem Prüfungsinformationen, die Ergebnisse einer Prüfung der Zugangsberechtigung der Bedienperson enthalten oder zu diesen in Bezug stehen, insbesondere einschließlich solcher Daten, die für eine Prüfung der Zugangsberechtigung einer Bedienperson verwendet werden, speicherbar sind.

10. Dosiereinrichtung (10) nach Anspruch 9, **dadurch gekennzeichnet, dass** die Prüfungsinformationen Informationen über die Bedienperson und/oder Informationen über die Uhrzeit und/oder das Datum zum Zeitpunkt einer Vornahme einer Anmeldung und/oder einer Abmeldung einer Bedienperson an der Dosiereinrichtung (10), enthalten.

11. Dosiereinrichtung (10) nach einem der vorangegangenen Ansprüche, **dadurch gekennzeichnet, dass** die Dosiereinrichtung ein Kommunikationsmodul (32), insbesondere ein GSM-Modul, zum drahtlosen oder drahtgebundene Senden und/oder Empfangen von Informationen, insbesondere von Prüfungsinformation, insbesondere für einen eindirektionalen oder einen bi-direktionalen Austausch von Informationen zwischen der Dosiereinrichtung und einer Zentrale (11), aufweist.

12. Dosiereinrichtung (10) nach einem der vorangegangenen Ansprüche, **dadurch gekennzeichnet, dass** in einem Speicher (31) der Dosiereinrichtung ein Arbeitszeitenplan für Bedienpersonen oder zumindest eine Arbeitszeit für eine Bedienperson hinterlegt ist, und dass die Dosiereinrichtung ein Warnsignal generiert, wenn zu einem vorgegebenen Zeitpunkt eine Anmeldung durch eine Bedienperson an der Dosiereinrichtung nicht erfolgt ist.

13. Verfahren zum Betreiben einer Dosiereinrichtung (10) zur Bereitstellung einer Reinigungs- oder Desinfektionslösung (35), insbesondere zur Anwendung in der Gebäudetechnik, insbesondere zum Betreiben einer Dosiereinrichtung nach einem der vorangegangenen Ansprüche, **gekennzeichnet durch** die folgenden Schritte:
a) Anmelden einer Bedienperson an der Dosiereinrichtung (10), umfassend das Prüfen der Zugangsberechtigung der Bedienperson durch eine Zugangskontrolleinrichtung (28),
b) Initiieren eines Dosiervorganges unter der Voraussetzung, dass die Prüfung der Zugangsberechtigung der Bedienperson durch die Zugangskontrolleinrichtung positiv ausgefallen ist,
c) Abmelden der Bedienperson von der Dosiereinrichtung.

## Claims

1. Dosing device (10) for providing a cleaning or disinfection solution (35), in particular for use in building technology, comprising at least one inlet (17a) for connecting to a container (15a), in which a medium (16a) to be dosed is arranged, and at least one outlet (25) for a target vessel (14), further comprising at least one pump (24) that can be accessed by a control device (26), wherein an operating device (27) for the initiation of a dosing process by an operator is arranged on the dosing device, **characterised in that** a device (36, 36a, 36b) for carrying out sign-in and sign-out by operators and/or service personnel is assigned to the dosing device.

2. Dosing device (10) according to claim 1, **characterised in that** the control device (26) manages and/or administers the sign-in processes and the sign-out processes and/or records the work times of the signed-in service personnel.

3. Dosing device (10) according to claim 1 or 2, **characterised in that** the dosing device has a memory (31) in which information about the sign-in processes and/or about the sign-out processes can be saved.

4. Dosing device (10) according to one of claims 1 to 3, **characterised in that** the sign-in device (36, 36a, 36b) is arranged on the dosing device (10).

5. Dosing device (10) according to one of claims 1 to 4, **characterised in that** the sign-in device (36, 36a, 36b) is arranged separately from the dosing device and is connected to said dosing device.

6. Dosing device (10) according to one of claims 1 to 5, **characterised in that** the information to be saved in the memory (31) contains information about sign-in processes and sign-out processes, information about the users and/or about the service personnel and/or information about the time and/or information about the date and/or about the point in time of a sign-in and a sign-out of a user or of a member of service personnel being carried out.

7. Dosing device (10) according to one of claims 1 to 6, **characterised in that** the dosing device and/or the sign-in device (36, 36a, 36b) has a communication module (32, 32b), in particular a GSM module, for transmitting and/or receiving, wirelessly or via a wired connection, information about sign-in processes and/or about sign-out processes, in particular for a one-directional and/or two-directional exchange of such information between the dosing device (10) and a central station (11).

8. Dosing device (10) according to one of claims 1 to 7, **characterised in that** an access checking device (28) for carrying out a check of the access authorisation of the operator is arranged on the dosing device, said access checking device being assigned to the operating device.

9. Dosing device (10) according to claim 8, **characterised in that** the dosing device has a memory (31) in which the checking information, which contains results of a check of the access authorisation of the operator or relates thereto, in particular including such information as is used to check the access authorisation of an operator, can be saved.

10. Dosing device (10) according to claim 9, **characterised in that** the checking information contains information about the about the operator and/or information about the time and/or date at the time a sign-in and/or a sign-out is carried out by an operator on the dosing device (10).

11. Dosing device (10) according to one of the preceding claims, **characterised in that** the dosing device has a communication module (32), in particular a GSM module, for transmitting and/or receiving, wirelessly or via a wired connection, information, in particular checking information, in particular for a one-directional and/or two-directional exchange of information between the dosing device and a central station (11).

12. Dosing device (10) according to one of the preceding claims, **characterised in that** a work timetable for operators, or at least a work time for an operator, is stored in a memory (31) of the dosing device, and **in that** the dosing device generates a warning signal if a sign-in has not been undertaken by an operator on the dosing device at a pre-determined time.

13. Method for operating a dosing device (10) for providing a cleaning or disinfection solution (35), in particular for use in building technology, in particular for operating a dosing device according to one of the preceding claims, **characterised by** the following steps:
a) sign-in of an operator on the dosing device (10), comprising checking the access authorisation of the operator via an access checking device (28),
b) initiation of a dosing process, provided that the check of the access authorisation of the operator via the access checking device has returned a positive result,
c) sign-out of the operator from the dosing device.

## Revendications

1. Dispositif de dosage (10) pour la préparation d'une solution de nettoyage ou de désinfection (35), en particulier destinée à être utilisée dans le bâtiment, comprenant au moins une entrée (17a) pour communiquer avec un récipient (15a) dans lequel un fluide à doser (16a) est placé, et au moins une sortie (25) destinée à un réservoir cible (14), comprenant en outre au moins une pompe (24) avec laquelle un appareil de commande (26) peut communiquer, un dispositif d'utilisation (27) étant disposé sur ce dispositif de dosage (26) pour permettre le déclenchement d'une opération de dosage par un utilisateur, **caractérisé en ce qu'**à ce dispositif de dosage est associé un dispositif (36, 36a, 36b) pour procéder à une connexion et à une déconnexion d'utilisateurs et/ou d'employés de service.

2. Dispositif de dosage (10) selon la revendication 1, **caractérisé en ce que** l'appareil de commande (26) gère et/ou administre les opérations de connexion et les opérations de déconnexion et/ou enregistre les temps de travail des employés de service connectés.

3. Dispositif de dosage (10) selon la revendication 1 ou 2, **caractérisé en ce que** ce dispositif de dosage comporte une mémoire (31) dans laquelle des informations sur les opérations de connexion et/ou sur les opérations de déconnexion peuvent être enregistrées.

4. Dispositif de dosage (10) selon une des revendications 1 à 3, **caractérisé en ce que** le dispositif de connexion (36, 36a, 36b) est disposé sur ce dispositif de dosage (10).

5. Dispositif de dosage (10) selon une des revendications 1 à 4, **caractérisé en ce que** le dispositif de connexion (36, 36a, 36b) est disposé séparément de ce dispositif de dosage et relié à celui-ci.

6. Dispositif de dosage (10) selon une des revendications 1 à 5, **caractérisé en ce que** les informations sur les opérations de connexion et les opérations de déconnexion à enregistrer dans la mémoire (31) comprennent des informations sur les utilisateurs et/ou sur les employés de service et/ou des informations sur l'heure et/ou des informations sur la date et/ou sur le moment de l'exécution d'une connexion et d'une déconnexion d'un utilisateur ou d'un employé de service.

7. Dispositif de dosage (10) selon une des revendications 1 à 6, **caractérisé en ce que** ce dispositif de dosage et/ou le dispositif de connexion (36, 36a, 36b) comportent un module de communication (32, 32b), en particulier un module GSM, pour envoyer et/ou recevoir par radio et/ou par connexion filaire des informations sur les opérations de connexion et/ou sur les opérations de déconnexion, en particulier pour un échange monodirectionnel et/ou bidirectionnel de ces informations entre ce dispositif de dosage (10) et une centrale (11).

8. Dispositif de dosage (10) selon une des revendications 1 à 7, **caractérisé en ce que** sur ce dispositif de dosage est agencé un dispositif de contrôle d'accès (28) pour procéder à un contrôle du droit d'accès de l'utilisateur qui est associé au dispositif d'utilisation.

9. Dispositif de dosage (10) selon la revendication 8, **caractérisé en ce que** ce dispositif de dosage comporte une mémoire (31) dans laquelle peuvent être enregistrées des informations de contrôle qui contiennent des résultats d'un contrôle du droit d'accès de l'utilisateur ou sont en lien avec ceux-ci, en particulier des données de ce type qui sont utilisées pour contrôler le droit d'accès d'un utilisateur.

10. Dispositif de dosage (10) selon la revendication 9, **caractérisé en ce que** les informations de contrôle comprennent des informations sur l'utilisateur et/ou des informations sur l'heure et/ou la date de l'exécution d'une connexion et/ou d'une déconnexion d'un utilisateur à ce dispositif de dosage (10).

11. Dispositif de dosage (10) selon une des revendications précédentes, **caractérisé en ce que** ce dispositif de dosage comporte un module de communication (32), en particulier un module GMS, pour l'envoi et/ou la réception par radio ou par connexion filaire d'informations, en particulier d'informations de contrôle, en particulier pour un échange monodirectionnel ou bidirectionnel d'informations entre ce dispositif de dosage et une centrale (11).

12. Dispositif de dosage (10) selon une des revendications précédentes, **caractérisé en ce que** dans une mémoire (31) de ce dispositif de dosage est déposé un planning de travail pour des utilisateurs ou au moins un horaire de travail pour un utilisateur, et que ce dispositif de dosage génère un signal d'avertissement si un utilisateur ne se connecte pas à ce dispositif de dosage à un moment prédéfini.

13. Procédé d'utilisation d'un dispositif de dosage (10) pour la préparation d'une solution de nettoyage ou de désinfection (35), en particulier destinée à être utilisée dans le bâtiment, en particulier d'utilisation d'un dispositif de dosage selon une des revendications précédentes, **caractérisé par** les étapes suivantes :
a) connexion d'un utilisateur au dispositif de dosage (10), comprenant le contrôle du droit d'accès de l'utilisateur par un dispositif de contrôle d'accès (28),
b) initiation d'une opération de dosage sous réserve que le contrôle du droit d'accès de l'utilisateur par le dispositif de contrôle d'accès ait été positif et
c) déconnexion de l'utilisateur du dispositif de dosage.
